# EUROPEAN PATENT SPECIFICATION

(11) **EP 2 305 735 B1**
(45) Date of publication and mention of the grant of the patent: **06.09.2017**
(21) Application number: 09773424.8
(22) Date of filing: 29.06.2009
(51) Int. Cl.: C08G 69/00, C08K 3/00, C08K 9/04, C08L 77/00

(54) **POLYAMIDE RESIN, COMPOSITION CONTAINING THE POLYAMIDE RESIN, AND MOLDED ARTICLES OF THE POLYAMIDE RESIN AND THE COMPOSITION**
POLYAMIDHARZ, DAS POLYAMIDHARZ ENTHALTENDE ZUSAMMENSETZUNG UND FORMKÖRPER AUS DEM POLYAMIDHARZ UND DER ZUSAMMENSETZUNG
RÉSINE DE POLYAMIDE, COMPOSITION CONTENANT LA RÉSINE DE POLYAMIDE ET ARTICLES MOULÉS DE LA RÉSINE DE POLYAMIDE ET DE LA COMPOSITION

(30) Priority: 30.06.2008 JP 2008170319; 29.08.2008 JP 2008221732; 22.10.2008 JP 2008271874; 26.12.2008 JP 2008331801
(43) Date of publication of application: 06.04.2011
(73) Proprietor: Toray Industries, Inc., Tokyo 103-8666 (JP)
(72) Inventor: KATO, Koya, Nagoya-shi Aichi 455-8502 (JP); AKITA, Masaru, Nagoya-shi Aichi 455-8502 (JP); MATSUOKA, Hideo, Nagoya-shi Aichi 455-8502 (JP)
(74) Representative: Webster, Jeremy Mark
(86) International application number: PCT/JP2009/061828
(87) International publication number: WO 2010/001846

(56) References cited:
- WO-A1-2007/085406
- WO-A1-2009/012933
- JP-A- 2003 292 614
- JP-A- 2006 348 276
- JP-A- 2008 274 288

## Description

The invention relates to a polyamide resin with high heat resistance and high melt retention stability that comprises pentamethylene diamine, terephthalic acid, and a derivative thereof as essential components, and also relates to compositions thereof and molded articles thereof.

### Background art

There are growing expectations for pentamethylene diamine as nonpetroleum material, synthetic raw material, for instance in the form of medical intermediates, and polymer material, and demands are increasing in recent years. A polypentamethylene adipamide resin, for instance, is disclosed in Patent document 1.

Patent document 2, on the other hand, has disclosed a polyamide resin composed mainly of a terephthalic acid derivative and an aliphatic diamine that consists of a pentamethylene diamine and a hexamethylene diamine as major components. This polyamide resin consists of a coupled unit (5T) of pentamethylene diamine and terephthalic acid and a coupled unit (6T) of hexamethylene diamine and terephthalic acid, and its melting point is controlled by adjusting the copolymerization ratio to a particular range. This resin is disadvantageous in that the effective melting point range is narrow.

Patent documents 3 to 7 have disclosed, furthermore, a highly heat-resistant polyamide resin consisting of hexamethylene diamine and terephthalic acid as major component, but it has been disadvantageous in that its melt retention stability is low.

### Prior art references:

Patent document 1: JP-A- 2003-292612; Patent document 2: JP-A- 2003-292613; Patent document 3: WO97/15610; Patent document 4: JP-A- SHO-60-158220; Patent document 5: JP-A- SHO-63-161021; Patent document 6: JP-A- HEI-02-41318; and Patent document 7: JP-A- 2008-274288.

WO 2009/012933, pursuant to Article 54(3) EPC, discloses polymer compositions comprising a semi-aromatic polyamide comprising repeating units derived from aliphatic diamines and dicarboxylic acids. An example polyamide E5 is prepared from pentamethylene diamine, hexamethylene diamine, adipic acid and terephthalic acid. WO 2007/085406 concerns semi-crystalline polyamides comprising units derived from aliphatic diamines and dicarboxylic acids, wherein the acids are a mixture of aromatic and aliphatic acids and the diamines are a mixture of long chain aliphatic and short chain aliphatic diamines.

### Summary of the invention

### Problems to be solved by the invention

The invention aims to provide a polyamide resin with high heat resistance and high melt retention stability that comprises pentamethylene diamine, terephthalic acid, and a derivative thereof as essential components.

### Means of solving the problems

The inventors reached the present invention after finding that it was effective to use pentamethylene diamine for producing a polyamide resin composition with high melt retention stability, use an aromatic dicarboxylic acid for enhancing its heat resistance, and copolymerize them with a third component, in addition to said two components, at a particular ratio for controlling the melting point of the polyamide resin.

Specifically, the invention provides:
(i) A polyamide resin obtainable through polycondensation of (A) pentamethylene diamine, (B) terephthalic acid and/or a derivative thereof, (C) at least one selected from the group of adipic acid, azelaic acid, sebacic acid, undecanedioic acid, dodecanedioic acid, isophthalic acid, 1,9-diaminononane, 1,10-diaminodecane, 1,11-diaminoundecane, 1,12-diaminododecane, caprolactam, undecalactam, laurolactam, aminocaproic acid, 11-aminoundecanoic acid, 12-aminododecanoic acid, and a derivative thereof, wherein the content by weight of the repeating unit derived from the component (C) is in the range of 10 wt% or more and 50 wt% or less of the total weight of the polymer while the relative viscosity at 25°C in a 98% sulfuric acid solution with a 0.01 g/ml content is 1.5 to 4.5, and
   wherein the content by weight of the repeating unit derived from the component (A), is in the range of 10 wt% or more and 45 wt% or less of the total weight of the polymer.
(ii) A polyamide resin as described in Paragraph (i) wherein the content by weight of the repeating unit derived from the component (A) is in the range of 10 wt% or more and 40 wt% or less of the total weight of the polymer.
(iii) A polyamide resin as described in either Paragraph (i) or (ii) wherein the content by weight of the repeating unit derived from the component (B), namely terephthalic acid and a terephthalic acid derivative, is in the range of 10 wt% or more and 60 wt% or less of the total weight of the polymer.
(iv) A polyamide resin as described in any of Paragraphs (i) to (iii) wherein the ratio of the relative viscosity Y of a sulfuric acid solution of a polyamide retained for 30 minutes at a temperature 20°C higher than the melting point to the relative viscosity X of the sulfuric acid solution before retention, namely Y/X, is in the range of 0.8 or more and 1.5 or less.
(v) A polyamide resin as described in any of Paragraphs (i) to (iv) wherein the temperature of the endothermic peak as determined by differential scanning calorimetry during the process of cooling the melt down to 30°C at a cooling rate of 20°C/min and then heating it at a heating rate of 20°C/min in an inert gas atmosphere is in the range of 260°C or more and 350°C or less.
(vi) A polyamide resin as described in any of Paragraphs (i) to (v) wherein the component (C) is adipic acid or a derivative thereof.
(vii) A polyamide resin as described in Paragraph (vi) wherein the heat quantity of the endothermic peak as determined by differential scanning calorimetry during the process of cooling the melt down to 30°C at a cooling rate of 20°C/min and then heating it at a heating rate of 20°C/min in an inert gas atmosphere is 55 J/g or more.
(viii) A polyamide resin as described in any of Paragraphs (i) to (v) wherein the component (C) is at least one selected from the group of 1,9-diaminononane, 1,10-diaminodecane, 1,11-diaminoundecane, and 1,12-diaminododecane.
(ix) A polyamide resin as described in any of Paragraphs (i) to (v) wherein the component (C) is at least one selected from the group of caprolactam, undecalactam, laurolactam, aminocaproic acid, 11-aminoundecanoic acid, and 12-aminododecanoic acid.
(x) A polyamide resin as described in any of Paragraphs (i) to (v) wherein the component (C) is at least one selected from the group of azelaic acid, sebacic acid, undecanedioic acid, dodecanedioic acid, and a derivative thereof.
(xi) A polyamide resin as described in any of Paragraphs (viii) to (x) wherein the water absorption determined after immersion in water and treatment in a hot air oven at 50°C for 100 hours is 8.5 wt% or less.
(xii) A polyamide resin as described in any of Paragraphs (i) to (v) wherein the component (C) is isophthalic acid or a derivative thereof.
(xiii) A polyamide resin composition comprising 0.1 to 200 parts by weight of an inorganic filler added to 100 parts by weight of a polyamide resin as described in any of Paragraphs (i) to (xii).
(xiv) A polyamide resin composition comprising 5 to 100 parts by weight of an impact strength modifier added to 100 parts by weight of a polyamide resin as described in any of Paragraphs (i) to (xii) or a polyamide resin composition as described in Paragraph (xiii).
(xv) A molded article produced by molding of a polyamide resin as described in any of Paragraphs (i) to (xii) or a polyamide resin composition as described in either Paragraph (xiii) or (xiv).

### Effect of the invention

The invention provides a polyamide resin with high heat resistance and high melt retention stability, polyamide resin compositions thereof, and molded articles thereof.

### Description of embodiments

The invention provides a polyamide resin produced through polycondensation of (A) pentamethylene diamine, (B) terephthalic acid and/or a derivative thereof, (C) at least one selected from the group of adipic acid, azelaic acid, sebacic acid, undecanedioic acid, dodecanedioic acid, isophthalic acid, 1,9-diaminononane, 1,10-diaminodecane, 1,11-diaminoundecane, 1,12-diaminododecane, caprolactam, undecalactam, laurolactam, aminocaproic acid, 11-aminoundecanoic acid, 12-aminododecanoic acid, and derivatives thereof.

There are no specific limitations on the method to produce the pentamethylene diamine as the component (A). The existing proposals include a method that performs synthesis from lysine using a vinyl ketone such as 2-cyclohexene-1-on as catalyst (Japanese Unexamined Patent Publication (Kokai) No. SHO-60-23328), an enzyme-based method that uses lysine decarboxylase for conversion from lysine (Japanese Unexamined Patent Publication (Kokai) No. 2004-114, and Japanese Unexamined Patent Publication (Kokai) No. 2005-6650), and a fermentation-based method that performs uses a saccharide as starting material (Japanese Unexamined Patent Publication (Kokai) No. 2004-222569, WO2007/113127). The organic synthesis method requires a high reaction temperature of about 150°C, while the enzyme- or fermentation-based methods perform a reaction at below 100°C, suggesting that the latter methods suffers less side reactions. Thus, it is preferable that a pentamethylene diamine produced by the latter methods is used as the component (A).

The lysine decarboxylase used for the latter methods is an enzyme that can convert lysine into pentamethylene diamine, which exists in many organisms including Escherichia microorganisms such as Escherichia coli K-12.

A preferable lysine decarboxylase to be used for the invention may be either one existing in those organisms, or one derived from recombinant cells in which the activity of the lysine decarboxylase has been enhanced.

The preferable recombinant cells include those originating from microorganisms, animals, plants, or insects. In the case of animals, for instance, cells of mice or rats, or their culture cells are used. In the case of plants, cells of Arabidopsis thaliana or tobacco, for instance, or their culture cells are used. In the case of insects, cells of silkworms, for instance, or their culture cells are used. In the case of microorganisms, colon bacillus, for instance, are used.

It is also preferable to use two or more lysine decarboxylases in combination.

The microorganisms that have these lysine decarboxylases include Bacillus halodurans, Bacillus subtilis, Escherichia coli, Selenomonas ruminantium, Vibrio cholerae, Vibrio parahaemolyticus, Streptomyces coelicolor, Streptomyces pilosus, Eikenella corrodens, Eubacterium acidaminophilum, Salmonella typhimurium, Hafnia alvei, Neisseria meningitidis, Thermoplasma acidophilum, Pyrococcus abyssi, and Corynebacterium glutamicum.

There are no specific limitations on the method to obtain lysine decarboxylases. It is possible, for instance, to use microorganisms that have lysine decarboxylases, or recombinant cells having lysine decarboxylases with enhanced activity can be cultured in appropriate culture media, followed by recovering the grown fungus and using them as resting microorganisms. It is also possible to crash such microorganisms and prepare a cell-free extracted liquid (extract), which may be refined as needed.

There are no specific limitations on the method to culture microorganisms or recombinant cells with lysine decarboxylases with the aim of extracting their lysine decarboxylases. To culture microorganisms, for instance, culture media containing a carbon source, nitrogen source, inorganic ions, and other necessary organic components are used. In the case of E. coli, for instance, an LB culture medium is used frequently. The useful carbon sources include saccharides such as glucose, lactose, galactose, fructose, arabinose, maltose, xylose, trehalose, ribose, and starch hydrolysate; alcohols such as glycerol, mannitol, and sorbitol; and organic acids such as gluconic acid, fumaric acid, citric acid, and succinic acid. The useful nitrogen sources include inorganic ammonium salts such as ammonium sulfate, ammonium chloride, and ammonium phosphate; organic nitrogen compounds such as soybean hydrolysate; and others such as ammonia gas and aqueous ammonia. The useful organic micronutrients include requirements such as various amino acid, vitamins (vitamin B1), nucleic acides (RNA), and others such as yeast extract, which may be added in appropriate amounts. In addition, calcium phosphate, calcium sulfate, iron ion, and manganese ion may be added, as needed, in small amounts.

There are no specific limitations on the culturing conditions and in the case of E. coli, for instance, culturing may be performed for 16 to 72 hours under aerobic conditions at a culture temperature of 30°C to 45°C, particularly preferably 37°C, and a culture pH of 5 to 8, particularly preferably 7. The pH adjustment may be achieved by using an inorganic or organic, acidic or alkaline substance, or ammonia gas.

Grown microorganisms and recombinant cells can be recovered from the culture media by centrifugal separation. Common methods can be used to prepare a cell-free extract from the recovered microorganisms and recombinant cells. Such methods include crushing microorganisms or recombinant cells in an ultrasonic processor, Dyno Mill, or French press, followed by removing the fungus residue by centrifugal separation to provide a cell-free extract.

Purification of a lysine decarboxylase from the cell-free extract can be achieved by using an appropriate combination of common enzyme purification processes such as ammonium sulfate fractionation, ion exchange chromatography, hydrophobic chromatography, affinity chromatography, gel filtration chromatography, isoelectric point precipitation, heat treatment, and pH adjustment. The purification should not necessarily be carried out completely, but it will be effective if contaminants including enzymes other than lysine decarboxylases involved in the decomposition of lysine, and products such as degrading enzymes of pentamethylene diamine can be removed.

The conversion of lysine into pentamethylene diamine with a lysine decarboxylase can be carried out by bringing the lysine decarboxylase obtained above into contact with lysine.

There are no specific limitations on the lysine concentration in the reaction liquid.

The required quantity of the lysine decarboxylase should be such that it can successfully catalyze the conversion of lysine into pentamethylene diamine.

The reaction temperature should be commonly 28 to 55°C, preferably about 40°C.

The pH for the reaction should be commonly 5 to 8, preferably about 6. The reaction liquid will turn to alkaline as the production of pentamethylene diamine proceeds, and therefore, it is preferable to add an inorganic or organic, acidic substance in order to maintain the pH of the reaction liquid. Preferably, hydrochloric acid may be used.

The reaction liquid may be either left to stand statically or stirred while reacting.

The lysine decarboxylase may be in an immobilized state.

The required reaction time depends on the reaction conditions including enzyme activity and substrate concentration, but it should commonly be 1 to 72 hours. The reaction may be performed continuously while supplying lysine.

After the reaction, the pentamethylene diamine thud produced is taken out from the reaction liquid. This can be carried out by using an ion exchange resin, precipitating agent, solvent extraction, simple distillation, or other common separation methods.

For the polyamide resin of the invention, the content by weight of the repeating unit derived from the component (A), namely pentamethylene diamine, is in the range of 10 wt% or more and 45 wt% or less, of the total weight of the polymer. It is preferably in the range 10 wt% or more and 40 wt% or less, and more st preferably 15 wt% or more and 40 wt% or less. The melt retention stability tends to be inferior if the content is less than 3 wt%. If it exceeds 45 wt%, equimolar polymerization with the dicarboxylic acid used as the component (B) and the component (C) will not proceed efficiently, making it difficult to achieve a high degree polymerization.

Said terephthalic acid or a derivative thereof used as the component (B) for invention may be terephthalic acid, terephthalic acid chloride, dimethyl terephthalate, or diethyl terephthalate.

For the invention, it is preferable that the content by weight of the repeating unit derived from the component (B), namely terephthalic acid and/or a derivative thereof, is in the range of 10 wt% or more and 60 wt% or less of the total weight of the polymer. It is more preferably in the range of 20 wt% or more and 58 wt% or less, most preferably 30 wt% or more and 56 wt% or less. The heat resistance tends to be inferior if the content is less than 10 wt%. If it exceeds 60 wt%, the melting point tends to be too high, leading to a decreased moldability.

For the component (C) for the invention, an appropriate substance may be used to meet the required characteristics of the polyamide resin. The use of adipic acid as the component (C) is effective if a polyamide resin with high crystallinity is to be produced. To produce a polyamide resin with a low water absorption rate, it is effective to use 1,9-diaminononane, 1,10-diaminodecane, 1,11-diaminoundecane, 1,12-diaminododecane, caprolactam, undecalactam, laurolactam, aminocaproic acid, 11-aminoundecanoic acid, and 12-aminododecanoic acid, azelaic acid, sebacic acid, undecanedioic acid, dodecanedioic acid, and derivatives thereof. The use of isophthalic acid is effective if a polyamide resin with a high glass transition temperature is to be produced.

For the invention, it is necessary that the content by weight of the repeating unit derived from the component (C) is in the range of 10 wt% or more and 50 wt% or less of the total weight of the polymer. It is also necessary that the component (C) accounts for 10 wt% or more and 50 wt% or less of the total weight of all input materials. It more preferably accounts for 15 wt% or more and 45 wt% or less, most preferably 20 wt% or more and 40 wt% or less. The melting point tends to be too high, leading to a decreased moldability if the component (C) accounts for less than 10 wt%. The heat resistance tends to be low if it accounts for more than 50 wt%.

The contents by weight of the respective repeating units derived from the components (A), (B), and (C) in the polyamide resin correspond with the proportions of the components (A), (B), and (C) fed as input materials, and therefore, their composition in the resulting polymer can be predicted before polymerization.

For the polyamide resin of the invention, components other than the components (A) to (C) may be added to the polymerization process unless they impair the effect of the invention. Specifically, such substances include aliphatic diamines such as ethylene diamine, 1,3-diaminopropane, 1,4-diaminobutane, 1,6-diaminohexane, 1,7-diaminoheptane, 1,8-diaminooctane, 1,13-diaminotridecane, 1, 14-diaminotetradecane, 1,15-diaminopentadecane, 1,16-diaminohexadecane, 1,17-diaminoheptadecane, 1,18-diaminooctadecane, 1,19-diaminononadecane, 1,20-diaminoeicosane, 2-methyl-1,5-diaminopentane, and 2-methyl-1,8-diaminooctane; aliphatic dicarboxylic acids such as oxalic acid, malonic acid, succinic acid, glutaric acid, pimelic acid, suberic acid, brassylic acid, tetradecanedioic acid, pentadecanedioic acid, octadecanedioic acid; alicyclic dicarboxylic acids such as cyclohexanedicarboxylic acid; aromatic dicarboxylic acids such as phthalic acid, and naphthalene dicarboxylic acid; alicyclic diamines such as cyclohexane diamine, and bis-(4-aminocyclohexyl) methane; and aromatic diamines such as xylylene diamine.

It is necessary for the polyamide resin of the invention to have a relative viscosity of 1.5 to 4.5 in a 98% sulfuric acid solution with a concentration of 0.01 g/ml at 25°C. It is most preferably 2.0 to 3.5. Sufficiently high practical strength will not be achieved if the relative viscosity is less than 1.5 while the flowability will decrease, leading to a poor moldability if it is 4.5 or more, both being unpreferable.

For the invention, a polymerization accelerator may be added as needed. The preferable polymerization accelerators include, for instance, inorganic phosphorus compounds such as phosphoric acid, phosphorous acid, hypophosphorous acid, pyrophosphoric acid, polyphosphoric acid, alkali metal salts thereof, and alkaline earth metal salts thereof, of which sodium phosphite, and sodium hypophosphite are particularly preferable. It is preferable that the content of these polymerization accelerators is in the range of 0.001 to 1 parts by weight relative to 100 parts by weight of the input material. Its effect will hardly develop if the content of the polymerization accelerators is less than 0.001 parts by weight, whereas if it exceeds 1 part by weight, the resulting polyamide resin tends to be too high in polymerization degree and difficult to melt-mold.

The invention aims to obtain a polyamide resin with a high melt retention stability, and accordingly, it is preferable that the ratio of the relative viscosity Y of a sulfuric acid solution of a polyamide after 30 minute retention at a temperature 20°C higher than the melting point (Tm₁) to the relative viscosity X of the sulfuric acid solution before retention, Y/X, is in the range of 0.8 or more and 1.5 or less. It is more preferably in the range of 0.8 or more and 1.3 or less, still more preferably 0.9 or more and 1.2 or less. A Y/X ratio of less than 0.7 is not preferable because the polyamide resin can decompose seriously during melt processing. If the Y/X ratio is more than 1.5, melting will cause an increase in viscosity, possibly leading to a low processability. The melting point as referred to here is the temperature of the endothermic peak (melting point: Tm₁) observed by differential scanning calorimetry during a process in which a specimen of the polyamide resin used for melt retention test is heated in an inert gas atmosphere up to a temperature 40°C higher than the melting point, as described Examples. In the case of a polyamide resin that does not have a melting point, melt retention test is performed at a temperature 170°C higher than the glass transition temperature.

It is known that polyamide resins produced from a diamine and a dicarboxylic acid generally gelate as the deammoniation reaction between terminal amino groups produces secondary amines that act as crosslinking points, as described Encyclopedia of Polymer Science and Technology, Vo1.10, p.546. In the case of a polyamide resin produced from hexamethylene adipamide unit and hexamethylene terephthalamide unit, for instance, it is known that if melt retention is performed, said reaction proceeds easily to cause gel formation, leading to a decrease in melt retention stability. The pentamethylene diamine used for the invention has the feature that it undergoes intramolecular cyclization. It appears likely that the polyamide resin of the invention has a high retention stability because the terminal pentamethylene diamines undergo cyclization during melt retention to depress the deammoniation reaction between terminal diamines, thereby decreasing the production of secondary amines.

The invention aims to obtain a polyamide resin with high heat resistance, and accordingly, it is preferable that the temperature of the endothermic peak (melting point: Tm₂) as determined by differential scanning calorimetry during the process of cooling the melt of said polyamide resin down to 30°C at a cooling rate of 20°C/min and then heating it at a heating rate of 20°C/min in an inert gas atmosphere is in the range of 260°C or more and 350°C or less. It is more preferably 270°C or more and 330°C or less, still more preferably 285°C or more and 320°C or less, and most preferably 290°C or more and 313°C or less. In the case where two or more endothermic peaks are detected, however, the endothermic peak with the largest peak strength is taken to represent the melting point. If the melting point is lower than 260°C, it will be about the same as or lower than the melting point of aliphatic polyamide resins such as polyhexamethylene adipamide resin (nylon 66) and polypentamethylene adipamide resin (nylon 56), and a high heat resistance will not be achieved. Melt molding will be difficult if the melting point is higher than 350°C.

For the invention, it is preferable that the polyamide resin has a glass transition temperature in the range of 65°C or more and 160°C or less. It is more preferably 70°C or more and 150°C or less, most preferably 80°C or more and 145°C or less. The heat resistance will not be improved significantly if the glass transition temperature is lower than 70°C, whereas melt molding tends to be difficult if it is higher than 160°C.

If the adipic acid is used as the component (C) for the invention with the aim of obtaining a polyamide resin with high crystallinity, the heat quantity of the endothermic peak (heat of fusion: ΔHm₂) as determined by differential scanning calorimetry during the process of cooling the melt of said polyamide resin down to 30°C at a cooling rate of 20°C/min and then heating it at a heating rate of 20°C/min in an inert gas atmosphere is preferably 55 J/g or more, more preferably 60 J/g or more. The elastic modulus and strength tend to decrease if it is less than 55 J/g. Here, the heat of fusion is defined as the total heat quantity of the endothermic peak in the temperature region of 200°C or more. If an exothermic peak appears in this temperature region, the heat quantity of the exothermic peak (commonly represented as a negative value, but converted to an absolute value to be used here) is subtracted from that of the endothermic peak (commonly represented as a positive value), and this difference is used.

If 1,9-diaminononane, 1,10-diaminodecane, 1,11-diaminoundecane, 1,12-diaminododecane, caprolactam, undecalactam, laurolactam, aminocaproic acid, 11-aminoundecanoic acid, or 12-aminododecanoic acid, azelaic acid, sebacic acid, undecanedioic acid, dodecanedioic acid, or a derivative thereof is used as the component (C) with the aim of obtaining a polyamide resin with a desirably low water absorption rate, it is preferable that the water absorption determined after treating said polyamide resin in a hot air oven at 50°C for 100 hours with immersed in water is 8.5 wt% or less. It is more preferably 8.0 wt% or less, still more preferably 7.0 wt% or less, and most preferably 6.5 wt% or less.

To produce the polyamide resin of the invention, generally known methods can be used, and, for instance, useful processes are disclosed in, for instance, Polyamide Resin Handbook (ed. Osamu Fukumoto). They include a thermal polymerization process in which a mixture of the components (A) to (C) is heated at a high temperature to carried out dehydration reaction; and a process for a polyamide resin composed only of a diamine and a dicarboxylic acid derivative (interface polymerization process) in which a diamine is dispersed in water while terephthaloyl chloride is dissolved in a water-immiscible organic solvent, followed by causing polycondensation at the interface between the aqueous phase and the organic phase. Here, the thermal polycondensation is defined as a produce process designed to raise the maximum reachable temperature of the polyamide resin to 200°C or more. The interface polymerization process has to be complicated because it requires using an organic solvent and neutralizing the hydrochloric acid resulting as a by-product of the polycondensation, and therefore, it is preferable to use the thermal polymerization process if production is performed for industrial purposes.

Thermal polycondensation of a polyamide resin requires a step for holding the polymerization system in a pressured state to produce a prepolymer, as commonly required in melting polymerization, and this step is preferably carried out under the coexistence of water. It is preferable that the quantity of the water fed accounts for 10 to 70 wt% of the total quantity of the input materials and water fed. If the water content is less than 10 wt%, it tends to take much time to achieve homogeneous dissolution of the nylon salt, leading to an excessively high heat history. If the content is more than 70 wt%, on the contrary, a very large heat energy will be consumed to remove the water, and a very long period of time will be needed to produce a prepolymer, which is not preferable. The pressure used to maintain said pressured state is preferably 10 to 25 kg/cm². In the case of the pressure at less than 10 kg/cm², it is unpreferable that pentamethylene diamine is easily volatilized out of the polymerization system. In the case of the pressure at more than 25kg/cm², it is unpreferable that the temperature of the polymerization system will have to be increased, leading to easy volatilization of the pentamethylene diamine out of the polymerization system.

To carried out thermal polymerization, a salt of a diamine and a dicarboxylic acid are prepared and lactam and aminocarboxylic acid are added as needed, followed by mixing them under the coexistence of water and heating to accelerate the dehydration reaction. When a substance with a large number of carbons is used as input material, however, said salt may not be used and the material is fed individually because it will be poor in water solubility.

For the polyamide resin of the invention, furthermore, it is also possible to increase its molecular weight by performing solid phase polymerization, or melt retention in the extruder after the thermal polycondensation. Said solid phase polymerization can be progressed by heating the material in a vacuum or inert gas in the temperature range from 100°C to the melting point. Said melt retention in the extruder is achieved by maintaining the melt retention at a temperature above the melting point of the polyamide resin. In particular, pressure reduction through a vent device is preferable because it serves for efficient removal of water during the polycondensation step, causing a large increase in the molecular weight.

Thermal polycondensation of a polyamide resin requires implementation of the polymerization reaction at a high temperature, and accordingly, the ratio of the total quantity of the amino group to that of the carboxyl group can decrease in the polymerization system as the polymerization progresses because the pentamethylene diamine volatilizes out of the polymerization system or because the cyclization product (piperidine) with a low boiling point by the deammoniation reaction volatilizes. Accordingly, it is preferable that a specified excessive quantity of the pentamethylene diamine is added when the input materials are fed to control the quantity of the amino group in the polymerization system in order to achieve the synthesis of a polyamide resin with a high molecular weight. When the number of moles of the aliphatic diamine is assumed to be a and that of the dicarboxylic acid derivative is assumed to be b, it is preferable that the ratio a/b, in the range of 1.003 to 1.10. It is more preferable that the ratio is adjusted from 1.008 to 1.05. It is still more preferably from 1.010 to 1.04. If the ratio a/b is less than 1.003, the total quantity of the amino group in the polymerization system will be very small compared to the total quantity of the carboxyl group, making it difficult to produce a polymer with a sufficiently high-molecular weight. If a/b is larger than 1.10, on the other hand, the total quantity of the carboxyl group in the polymerization system will be very small compared to the total quantity of the amino group, making it difficult to produce a polymer with a sufficiently high-molecular weight. Furthermore, such a quantity is also unpreferable in terms of productivity and environmental protection because vaporization of the diamine component will increase.

Inorganic fillers and other polymers may be added to obtain the polyamide resin composition of the invention. Generally known fillers for resin may be used as said inorganic fillers. They include, for instance, glass fiber, carbon fiber, potassium titanate whisker, zinc oxide whisker, aluminum borate whisker, aramid fiber, alumina fiber, silicon carbide fiber, ceramic fiber, asbestos fiber, gypsum fiber, metal fiber, wollastonite, zeolite, sericite, kaolin, mica, talc, clay, pyrophyllite, bentonite, montmorillonite, hectorite, synthesize mica, asbestos, aluminosilicate, alumina, silicon oxide, magnesium oxide, zirconium oxide, titanium oxide, iron oxide, calcium carbonate, magnesium carbonate, dolomite, calcium sulfate, barium sulfate, magnesium hydroxide, calcium hydroxide, aluminum hydroxide, glass beads, ceramic beads, boron nitride, silicon carbide, and silica. They may be in a hollow shape and two or more of these inorganic fillers may be used in combination. For swellable layered silicates such as bentonite, montmorillonite, hectorite, and synthetic mica, organized layered silicates prepared by cation exchange of interlayer ions with organic ammonium may be used. To reinforce the polyamide resin, glass fiber and carbon fiber are preferable among said fillers. To improve the surface appearance of the polyamide resin composition, it is preferable that the inorganic fillers have an average particle diameter of 0.001 to 10 µm. An average particle diameter of below 0.001 µm is unpreferable because the resulting polyamide resin will have a considerably poor melt processability. If the particle diameter exceeds 10 µm, the molded article tends to have a poor surface appearance. The average particle diameter is preferably 0.01 to 5 µm, more preferably 0.05 to 3 µm. The average particle diameter referred to above is measured by the precipitation method. To achieve both the reinforcement of the polyamide resin and improvement of the surface appearance, it is preferable that talc, kaolin, or wollastonite is used as said inorganic filler.

To achieve a high mechanical strength, it is preferable that these inorganic fillers undergo preliminary processing using a coupling agent such as isocyanate compound, organic silane compound, organic titanate compound, organic borane compound, and epoxy compound. The use of an organic silane compound is particularly preferable. The useful ones include epoxy-containing alkoxysilane compounds such as γ-glycidoxy propyl trimethoxysilane, γ-glycidoxy propyl triethoxy silane, and β-(3,4-epoxy cyclohexyl) ethyl trimethoxysilane; mercapto-containing alkoxysilane compounds such as γ-mercaptopropyl trimethoxysilane, and γ-mercaptopropyl triethoxysilane; ureido-containing alkoxysilane compounds such as γ-ureidopropyl triethoxysilane, γ-ureidopropyl trimethoxy silane, and γ-(2-ureidoethyl) aminopropyl trimethoxysilane; isocyanato-containing alkoxysilane compounds such as γ-isocyanatopropyl triethoxysilane, γ-isocyanatopropyl trimethoxysilane, γ-isocyanatopropyl methyl dimethoxysilane, γ-isocyanatopropyl methyl diethoxysilane, γ-isocyanatopropyl ethyl dimethoxysilane, γ-isocyanatopropyl ethyl diethoxysilane, and γ-isocyanatopropyl trichlorosilane; amino-containing alkoxysilane compounds such as γ-(2-aminoethyl) aminopropyl methyl dimethoxysilane, γ-(2-aminoethyl) aminopropyl trimethoxysilane, and γ-aminopropyl trimethoxysilane; hydroxyl-containing alkoxysilane compounds such as γ-hydroxypropyl trimethoxysilane, and γ-hydroxypropyl triethoxysilane; alkoxysilane compounds containing a carbon-carbon unsaturated group such as γ-methacryloxy propyl trimethoxysilane, vinyl trimethoxysilane, and N-β-(N-vinyl benzyl aminoethyl)-γ-aminopropyl trimethoxysilane hydrochloride; and anhydride-group-containing alkoxysilane compounds 3-trimethoxy silyl propyl succinic anhydride. In particular, γ-methacryloxy propyl trimethoxysilane, γ-(2-aminoethyl) aminopropyl methyl dimethoxysilane, γ-(2-aminoethyl) aminopropyl trimethoxysilane, γ-aminopropyl trimethoxysilane, and 3-trimethoxy silyl propyl succinic anhydride are used preferably. For these silane coupling agents, the ordinary method which comprises a step for surface treatment of the fillers and subsequent melt-kneading with the polyamide resin is preferably used, and the so-called integral blend method which comprises a step for adding these coupling agents during the melt-kneading of the polyamide resin with the fillers instead of performing surface treatment of the fillers in advance is also used.

It is preferable that the quantity of these coupling agents used for processing is 0.05 to 10 parts by weight relative to 100 parts by weight of the inorganic fillers. It is more preferably 0.1 to 5 parts by weight, most preferably 0.5 to 3 parts by weight. The processing with a coupling agent will not serve effectively to improve the mechanical characteristics if the quantity is less than 0.05 parts by weight, whereas inorganic fillers will tend to coagulate, failing to disperse in the polyamide resin if it exceeds 10 parts by weight.

The blending quantity of said inorganic fillers for the invention is in the range of 0.1 to 200 parts by weight relative to 100 parts by weight of polyamide resin. It is preferably 1 to 100 parts by weight, more preferably 1.1 to 60 parts by weight, and most preferably 5 to 50 parts by weight. The rigidity and strength will not be improved significantly if it is less than 0.1 part by weight, whereas if it exceeds 200 parts by weight, it tends to be difficult to achieve uniform dispersion in the polyamide resin, leading to a decrease in strength.

Other polymers may be added to obtain the polyamide resin composition of the invention. Such other polymers include other polyamides, polyethylene, polypropylene, polyester, polycarbonate, polyphenylene ether, polyphenylene sulfide, liquid crystal polymer, polysulfone, polyethersulfone, ABS resin, SAN resin, and polystyrene. To improve the impact resistance of the polyamide resin of the invention, it is preferable to use a modified polyolefin such as a (co)polymer produced through polymerization of an olefin compound and/or a conjugated diene compound.

Such (co)polymers include ethylene copolymer, conjugated diene polymer, and conjugated diene-aromatic vinyl hydrocarbon copolymer.

Here, the ethylene copolymer refers to a copolymer or a multicomponent copolymer of ethylene and other monomers, and said other monomers to be copolymerized with ethylene include α-olefins with a carbon number of 3 or more, unconjugated dienes, vinyl acetate, vinyl alcohol, α,β-unsaturated carboxylic acids, and derivatives thereof.

Said α-olefins with a carbon number of 3 or more include propylene, butene-1, pentene-1, 3-methyl pentene-1, and octacene-1, of which propylene, butene-1 is preferably used. Said unconjugated dienes include norbornene compounds such as 5-methylidene-2-norbornene, 5-ethylidene-2-norbornene, 5-vinyl-2-norbornene, 5-propenyl-2-norbornene, 5-isopropenyl-2-norbornene, 5-crotyl-2-norbornene, 5-(2-methyl-2-butenyl)-2-norbornene, 5-(2-ethyl-2-butenyl)-2-norbornene, and 5-methyl-5-vinyl norbornene, and other such as dicyclopentadiene, methyl tetra hydroindene, 4,7,8,9-tetra hydroindene, 1,5-cyclooctadiene, 1,4-hexadiene, isoprene, 6-methyl-1,5-heptadiene, and 11-tridecadiene, of which 5-methylidene-2-norbornene, 5-ethylidene-2-norbornene, dicyclopentadiene, and 1,4-hexadiene are preferably used. Said α,β-unsaturated carboxylic acids include acrylic acid, methacrylic acid, ethacrylic acid, crotonic acid, maleic acid, fumaric acid, itaconic acid, citraconic acid, and butene dicarboxylic acid, and said derivatives thereof include alkyl ester, allyl ester, glycidyl ester, anhydride, and imide.

Said conjugated diene polymer is a polymer comprising at least one or more conjugated dienes as constituents, and it may be, for instance, a homopolymer comprising 1,3-butadiene, or a copolymer containing one or more monomers selected from the group of 1,3-butadiene, isoprene (2-methyl-1,3-butadiene), 2,3-dimethyl-1,3-butadiene, and 1,3-pentadiene. Furthermore polymers produced by reducing, through hydrogenation, some or all of the unsaturated bonds in said polymers listed above are preferably used.

Said conjugated diene-aromatic vinyl hydrocarbon copolymer is a block copolymer or a random copolymer composed of a conjugated diene and an aromatic vinyl hydrocarbon, and the examples of said constituent conjugated diene include those monomers listed above, of which 1,3-butadiene and isoprene are preferably used. The specific examples of said aromatic vinyl hydrocarbon include styrene, α-methyl styrene, o-methyl styrene, p-methyl styrene, 1,3-dimethyl styrene, and vinyl naphthalene, of which styrene is preferably used. Furthermore a polymer produced by reducing, through hydrogenation, some or all of the unsaturated bonds outside the aromatic rings in said conjugated diene-aromatic vinyl hydrocarbon copolymer is preferably used.

Polyamide-based elastomers and polyester-based elastomers can also be used. These impact resistance improving materials may be used as a mixture of two or more thereof.

The specific examples of said impact strength modifiers include ethylene/propylene copolymers, ethylene/butene-1 copolymers, ethylene/hexene-1 copolymers, ethylene/propylene/dicyclopentadiene copolymers, ethylene/propylene/5-ethylidene-2-norbornene copolymers, unhydrogenated or hydrogenated styrene/isoprene/styrene triblock copolymers, unhydrogenated or hydrogenated styrene/butadiene/styrene triblock copolymers, ethylene/methacrylic acid copolymers, and copolymers produced by converting some or all of the carboxylic acid portions in said copolymers into a salt with sodium, lithium, potassium, zinc, or calcium; ethylene/methyl acrylate copolymers, ethylene/ethyl acrylate copolymers, ethylene/methyl methacrylate copolymers, ethylene/ethyl methacrylate copolymers, ethylene/ethyl acrylate-g-maleic anhydride copolymers, (hereinafter "g" denoting "graft"), ethylene/methyl methacrylate-g-maleic anhydride copolymers, ethylene/ethyl acrylate-g-maleimide copolymers, ethylene/ethyl acrylate-g-N-phenyl maleimide copolymers, and partially saponified products of said copolymers; and ethylene/glycidyl methacrylate copolymers, ethylene/vinyl acetate/glycidyl methacrylate copolymers, ethylene/methyl methacrylate/glycidyl methacrylate copolymers, ethylene/glycidyl acrylate copolymers, ethylene/vinyl acetate/glycidyl acrylate copolymers, ethylene/glycidyl ether copolymers, ethylene/propylene-g-maleic anhydride copolymers, ethylene/butene-1-g-maleic anhydride copolymers, ethylene/propylene/1,4-hexadiene-g-maleic anhydride copolymers, ethylene/propylene/dicyclopentadiene-g-maleic anhydride copolymers, ethylene/propylene/2,5-norbornadiene-g-maleic anhydride copolymers, ethylene/propylene-g-N-phenyl maleimide copolymers, ethylene/butene-1-g-N-phenyl maleimide copolymers, hydrogenated styrene/butadiene/styrene-g-maleic anhydride copolymers, hydrogenated styrene/isoprene/styrene-g-maleic anhydride copolymers, ethylene/propylene-g-glycidyl methacrylate copolymers, ethylene/butene-1-g-glycidyl methacrylate copolymers, ethylene/propylene/1,4-hexadiene-g-glycidyl methacrylate copolymers, ethylene/propylene/dicyclopentadiene-g-glycidyl methacrylate copolymers, hydrogenated styrene/butadiene/styrene-g-glycidyl methacrylate copolymers, nylon 12/polytetramethylene glycol copolymers, nylon 12/polytrimethylene glycol copolymers, polybutylene terephthalate/polytetramethylene glycol copolymers, and polybutylene terephthalate/polytrimethylene glycol copolymers. Above all, it is preferable that ethylene/methacrylic acid copolymers and copolymers produced by converting some or all of the carboxylic acid portions in said copolymers into a salt with sodium, lithium, potassium, zinc, or calcium; and ethylene/propylene-g-maleic anhydride copolymers, ethylene/butene-1-g-maleic anhydride copolymers, and hydrogenated styrene/butadiene/styrene-g-maleic anhydride copolymers are used. Moreover it is particularly preferable that ethylene/methacrylic acid copolymers, copolymers produced by converting some or all of the carboxylic acid portions in said copolymers into a salt with sodium, lithium, potassium, zinc, or calcium, ethylene/propylene-g-maleic anhydride copolymers, and ethylene/butene-1-g-maleic anhydride copolymers are used.

The blending quantity of the impact resistance improving materials used for the invention is 5 to 100 parts by weight relative to 100 parts by weight of the polyamide resin. It is preferably 5 to 50 parts by weight, more preferably 10 to 40 parts by weight, and most preferably 10 to 30 parts by weight. The impact resistance will not be improved sufficiently if it is less than 5 parts by weight, whereas the melt viscosity tends to be too high, leading to an inferior moldability if it exceeds 100 parts by weight.

There are no specific limitations on the preparation method for the polyamide resin composition of the invention. The specific examples include melt-kneading after feeding the input materials such as polyamide resin, inorganic fillers, and/or other polymers into a generally known melt-kneading machine such as single or twin screw extruder, Banbury mixer, kneader and mixing roll.

In the case where a melt-kneading machine is used as the method for dispersing these inorganic fillers and other polymers uniformly in the polyamide resin, it is effective to appropriately control the L/D (screw length/screw diameter) ratio, use of vents, kneading temperature, residence time, and the feeding position and quantity of these components. In general, a larger L/D ratio for the melt-kneading machine and a longer residence time are preferable to promote uniform dispersion of the inorganic fillers and other polymers.

In addition, various additives may be added to the polyamide resin of the invention at any appropriate time point unless they impair the effect of the invention. They include, for instance, antioxidants and thermal stabilizers (such as hindered phenolic-, hydroquinone-, phosphite-based ones, substitutes thereof, halogenated copper, and iodine compounds); weathering agents (such as resorcinol-, salicylate-, benzotriazole-, benzophenone-, and hindered amine-based ones); mold releasing agents and lubricants (such as aliphatic alcohol, aliphatic amide, aliphatic bisamide, bisurea, and polyethylene wax); pigments (such as cadmium sulfide, phthalocyanine, and carbon black); dyes (such as nigrosine, and aniline black); plasticizers (octyl p-oxybenzoate, and N-butyl benzene sulfone amide); antistatic agents (alkyl sulfate type anionic antistatic agent, quaternary ammonium salt type cationic antistatic agent, nonionic antistatic agent such as polyoxyethylene sorbitan monostearate, and betaine-based amphoteric antistatic agent), and flame retardants (melamine cyanurate; hydroxides such as magnesium hydroxide, and aluminum hydroxide; phosphorous flame retardants such as ammonium polyphosphate, melamine polyphosphate, metal salts of phosphinic acid; and others such as brominated polystyrene, brominated polyphenylene oxide, brominated polycarbonate, brominated epoxy resin, and combinations of these bromine-based flame retardants with antimony trioxide).

To obtain the molded article of the invention, the polyamide resin or the polyamide resin composition of the invention may be molded by an appropriate molding method such as injection molding, extrusion molding, blow molding, vacuum molding, melting spinning, and film molding. The molded articles can be processed in various desired shapes such as automobile parts, mechanical parts, and other molded resin articles. The specific uses include components used in contact with cooling water in the automobile engine room such as automobile engine cooling water system parts, particularly radiator tank parts at the top and bottom of the radiator tank, cooling liquid reserve tank, water pipe, water pump housing, water pump impeller, valve, and other water pump parts; electric/electronic related parts such as various switches, subminiature switch, DIP switch, switch housing, lamp socket, banding band, connector, connector housing, connector shell, various IC socket, coil bobbin, bobbin cover, relay, relay box, capacitor case, motor's internal parts, small motor case, gear/cum, dancing pulley, spacer, insulator, fastener, buckle, wire clip, bicycle wheel, caster, helmet, terminal block, electric power tool housing, starter insulator component, spoiler, canister, radiator tank, chamber tank, reservoir tank, fuse box, air cleaner case, air conditioner fan, terminal's housing, wheel cover, air intake and exhaust pipe, bearing retainer, cylinder head cover, intake manifold, water pipe impeller, clutch release, speaker diaphragm, heat resistant container, microwave oven parts, rice cooker parts, and printer ribbon guide; and others such as automobile/vehicle related parts, home electric appliances/office electric product parts, computer related parts, facsimile/copier related parts, machine related parts, and parts for other various uses.

### Examples

The polyamide resin samples produced in Examples and Comparative examples were evaluated with the following methods.

### [Relative viscosity (ηr)]

Measurements were made in a 98% sulfuric acid with a 0.01 g/ml concentration at 25°C using an Ostwald viscometer.

### [Melting point (Tm) and glass transition temperature (Tg)]

Measurements were made by using about 5 mg specimens in a nitrogen atmosphere with robot DSC RDC220 supplied by Seiko Instruments Inc under the following conditions. Each polymerized polyamide resin sample was heated up to a temperature 40°C higher than the melting point, and the temperature of the endothermic peak observed during this step was determined (melting point: Tm₁). It was maintained at the temperature 40°C higher than the melting point for 2 minutes, cooled down to 30°C at a cooling rate of 20°C/min, and maintained at 30°C for 3 minutes. Subsequently, it was heated up to a temperature 40°C higher than the melting point at a heating rate of 20°C/min, and the temperature of the endothermic peak observed during this step (melting point: Tm₂) and the heat quantity (heat of fusion: ΔHm₂) were determined. Another polyamide resin specimen was quenched in liquid nitrogen from a molten state at a temperature 30°C higher than the melting point, and then heated at a heating rate of 20°C/min, and the glass transition temperature (Tg) was determined from the temperature at the midpoint of the stepwise endothermic peak in the DSC curve.

### [Water absorption (method A)]

Using an injection molding machine (SG75H-MIV, supplied by Sumitomo Heavy Industries, Ltd.), an ASTM No. 4 dumbbell test piece was prepared under the conditions of a cylinder temperature of 20°C higher than the melting point, mold temperature of 70°C, injection pressure of 5 kgf/cm² higher than the lower limit of molding pressure. This test piece was treated for 135 hours in a constant temperature and humidity tank adjusted to a temperature of 35°C and a relative humidity 95%, and the water absorption was calculated from the difference in weight between before and after the treatment.

### [Water absorption (method B)]

A film specimen with a thickness of about 150 µm prepared in a hot press was treated in a hot air oven at 150°C for 10 minutes. The film was treated in a hot air oven at 50°C for 100 hours with immersed in water, and the water absorption was calculated from the difference in weight between before and after the treatment.

### [Retention stability]

A specimen was held in a nitrogen atmosphere at a temperature 20°C higher than Tm₁ for 30 minutes, and put in a 98% sulfuric acid to determine whether it could dissolve up to a concentration of 0.01 g/ml. Results were shown with a "o" for complete dissolution and a "x" for incomplete dissolution. In the case of complete dissolution, measurements were made to determine the sulfuric acid viscosity retention rate, Y/X, which is the ratio of the sulfuric acid relative viscosity after melt retention, Y, to the sulfuric acid relative viscosity before retention, X.

### [Bending elastic modulus]

An injection molding machine (SG75H-MIV, supplied by Sumitomo Heavy Industries, Ltd., adjusted to a cylinder temperature 25°C higher than the melting point, mold temperature of 80°C, injection pressure of 5 kg/cm² higher than the lower limit pressure) was used to prepare a rod-like test piece with a size of 1/2 inch (1.27 cm) × 5 inch (12.7 cm) × 1/4 inch (0.635 cm), which was subjected to a bending test according to ASTM-D790.

### [Tensile strength]

An injection molding machine (SG75H-MIV, supplied by Sumitomo Heavy Industries, Ltd., adjusted to a cylinder temperature 25°C higher than the melting point, mold temperature of 80°C, injection pressure of 5 kg/cm² higher than the lower limit pressure) was used to prepare an ASTM No. 1 dumbbell test piece, which was subjected to a tensile test according to ASTM-D638.

### Reference example 1 (production of lysine decarboxylase)

E. coli JM-109 was cultured as follows. One platinum loop of this strain was inoculated in 5 ml of a LB culture medium and it was shaked at 30°C for 24 hours for preculture. Then, 50 ml of the LB culture medium was put in a 500 ml Erlenmeyer flask, and steam-sterilized at 115°C for 10 minutes for pretreatment. The precultured strain was transferred to this culture medium and cultured for 24 hours under the conditions of an amplitude 30 cm and 180 rpm while adjusting the pH to 6.0 with a 1N aqueous solution of hydrochloric acid. Fungus bodies obtained thus was collected, and a cell-free extract was prepared by ultrasonic crushing and centrifugal separation. The activity of this lysine decarboxylase was measured with a common method (Kenji Soda and Haruo Misono, "Seikagaku Jikken Koza", vol. 11-the first volume, pp. 179-191 (1976),). The use of lysine as substrate can cause conversion through lysine monooxygenase, lysine oxidase and lysine mutase, which is considered to be essentially the main path, and therefore, the cell-free extract of E. coli JM-109 was heated at 75°C for 5 minutes in order to prevent this reaction. This cell-free extract was fractionated with 40% saturated and 55% saturated ammonium sulfate. The resulting crude lysine decarboxylase solution was then used to produce pentamethylene diamine from lysine.

### Reference example 2 (production of pentamethylene diamine)

An aqueous solution composed of 50 mM lysine hydrochloride (supplied by Wako Pure Chemical Industries, Ltd.), 0.1 mM pyridoxal phosphoric acid (supplied by Wako Pure Chemical Industries, Ltd.), and 40 mg/L crude lysine decarboxylase (prepared in Reference example 1) was prepared, and 1000 ml of the solution was reacted at 45°C for 48 hours while maintaining the pH from 5.5 to 6.5 with a 0.1N aqueous solution of hydrochloric acid to provide pentamethylene diamine hydrochloride. Sodium hydroxide was added to this aqueous solution to convert pentamethylene diamine hydrochloride to pentamethylene diamine, which was then subjected to extraction with chloroform and distillation under reduced pressure [1.3KPa (10 mmHg), 60°C] to provide pentamethylene diamine.

### Examples 1 and 2 and Comparative examples 1 to 3

A 50 wt% aqueous solution of an equimolar salt (56) of the pentamethylene diamine produced in Reference example 2 and adipic acid and a 30 wt% aqueous solution of an equimolar salt (5T) of the pentamethylene diamine and terephthalic acid were mixed in a weight ratio as shown in Table 1, and about 60g of the solution was poured in a test tube and placed in an autoclave, which was then closed airtightly, followed by nitrogen substitution. The jacket temperature was set to 310°C, and heating was started. After the internal pressure had reached 17.5 kg/cm², the internal pressure was maintained at 17.5 kg/cm² for 3 hours. Subsequently, the jacket temperature was set to 320°C, and the internal pressure was gradually decreased for 1 hour down to atmospheric pressure. Then, the heating was stopped when the internal temperature reached 285°C. After cooling to room temperature, the test tube was taken out of the autoclave to obtain a polyamide resin.

### Examples 3 to 5 and Comparative example 4

A polyamide resin produced by thermal polycondensation under the same conditions as in Example 1 was crushed and subjected to solid phase polymerization at 240°C under 40 Pa to obtain a polyamide resin.

### Example 6

Except for using aminocaproic acid as an additional material, the same procedure as in Example 3 was carried out to produce a polyamide resin.

### Comparative example 5

Except for using, as an input material, a 50 wt% aqueous solution of an equimolar salt (66) of hexamethylene diamine and adipic acid, the same procedure as in Example 1 was carried out to produce a polyamide resin.

### Comparative example 6

Except for using, as input materials, a 50 wt% aqueous solution of an equimolar salt (56) of the pentamethylene diamine produced in Reference example 2 and adipic acid and a 50 wt% aqueous solution of an equimolar salt (66) of hexamethylene diamine and adipic acid, the same procedure as in Example 1 was carried out to produce a polyamide resin.

### Comparative example 7

Except for using, as input materials, a 30 wt% aqueous solution of an equimolar salt (5T) of the pentamethylene diamine produced in Reference example 2 and terephthalic acid and a 30 wt% aqueous solution of an equimolar salt (6T) of hexamethylene diamine and terephthalic acid, the same procedure as in Example 3 was carried out to produce a polyamide resin.

### Comparative example 8

Except for using, as input materials, a 30 wt% aqueous solution of an equimolar salt (M5T) of 2-methyl pentamethylene diamine and terephthalic acid and a 30 wt% aqueous solution of an equimolar salt (6T) of hexamethylene diamine and terephthalic acid, the same procedure as in Example 3 was carried out to produce a polyamide resin.

### Comparative examples 9 to 11

Except for using, as input materials, a 50 wt% aqueous solution of an equimolar salt (66) of hexamethylene diamine and adipic acid and a 30 wt% aqueous solution of an equimolar salt (6T) of hexamethylene diamine and terephthalic acid, the same procedure as in Example 3 was carried out to produce a polyamide resin.
[Table 1]

**Table 1**

| | | Comparative example 1 | Comparative example 2 | Comparative example 3 | Example 1 | Example 2 | Example 3 | Example 4 | Example 5 | Comparative example 4 | Example 6 |
|---|---|---|---|---|---|---|---|---|---|---|---|
| composition | | 56 | 56/5T =95/5 | 56/5T =90/10 | 56/5T =80/20 | 56/5T =70/30 | 56/5T =50/50 | 56/5T =30/70 | 56/5T =25/75 | 5T | 56/5T/6 =27/63/10 |
| (A) | pentamethylene diamine | 41.1 | 41.0 | 40.8 | 40.5 | 40.2 | 39.6 | 39.0 | 38.9 | 38.1 | 35.1 |
| (B) | terephthalic acid | | 3.1 | 6.2 | 12.4 | 18.6 | 31.0 | 43.3 | 46.4 | 61.9 | 39.0 |
| (C) | adipic acid | 58.9 | 55.9 | 53.0 | 47.1 | 41.2 | 29.4 | 17.7 | 14.7 | | 15.9 |
| | aminocaproic acid | | | | | | | | | | 10.0 |
| ηr | - | 2.76 | 2.67 | 2.38 | 2.68 | 2.25 | 2.43 | 2.05 | 1.89 | 1.81 | 2.25 |
| Tm₁ | °C | 255 | 256 | 257 | 265 | 273 | 296 | 328 | 337 | 356 | 303 |
| Tm₂ | °C | 254 | 255 | 256 | 260 | 268 | 291 | 325 | 336 | 354 | 299 |
| ΔHm₂ | J/g | 64.1 | 60.9 | 61.8 | 61.5 | 63.5 | 62.5 | 63.6 | 68.1 | 84.6 | 58.8 |
| Tg | °C | 53 | 55 | 58 | 65 | 76 | 89 | 107 | 113 | 141 | 99 |
| solubility of retained sample in sulfuric acid | - | o | o | o | o | o | o | o | o | o | o |
| Y/X | - | 0.971 | 0.985 | 0.979 | 1.01 | 1.00 | 1.00 | 0.941 | 0.921 | 0.812 | 1.01 |

[Table 2]

**Table 2**

| | | Comparative example 5 | Comparative example 6 | Comparative example 7 | Comparative example 8 | Comparative example 9 | Comparative example 10 | Comparative example 11 |
|---|---|---|---|---|---|---|---|---|
| composition | | 66 | 56/66 =50/50 | 5T/6T =50/50 | M5T/6T =50/50 | 66/6T =80/20 | 66/6T =50/50 | 66/6T =20/80 |
| (A) | pentamethylene diamine | | 20.6 | 19.0 | | | | |
| (B) | terephthalic acid | | | 60.4 | 58.8 | 11.8 | 29.4 | 47.1 |
| (C) | adipic acid | 55.7 | 57.3 | | | 44.5 | 27.9 | 11.1 |
| other components | hexamethylene diamine | 44.3 | 22.1 | 20.6 | 20.6 | 43.7 | 42.7 | 41.8 |
| | 2-methyl pentamethylene diamine | | | | 20.6 | | | |
| ηr | - | 2.75 | 2.60 | 2.44 | 2.21 | 2.93 | 2.41 | 2.99 |
| Tm₁ | °C | 263 | 220 | 317 | 304 | 263 | 302 | 345 |
| Tm₂ | °C | 262 | 220 | 314 | 302 | 261 | 288 | 337 |
| ΔHm₂ | J/g | 60.8 | 53.9 | 52.5 | 30.7 | 56.3 | 52.7 | 59.3 |
| Tg | °C | 55 | 50 | 141 | 142 | 61 | 83 | 113 |
| solubility of retained sample in sulfuric acid | - | o | o | o | o | x | x | x |
| Y/X | - | 0.993 | 1.00 | 1.02 | 1.01 | - | - | - |

Comparison of Examples 1 to 5 with Comparative examples 1 to 4 indicates that a highly heat resistant polyamide resin in an appropriate melting point range to maintain moldability can be produced by adjusting the quantity of the component (C) to a particular range. Comparison with Comparative examples 6 to 8 indicates that the polyamide resin of the invention has a large ΔHm₂ value and a high crystallinity. Furthermore, comparison with Comparative examples 9 to 11 indicates that the polyamide resin of the invention has a high melt retention stability

### Examples 7 to 15 and Comparative examples 12 to 18

Equimolar salts of aliphatic diamine and dicarboxylic acid were prepared according to the weight ratios shown in Tables 3 and 4 (aminocaproic acid was also added in Examples 10 and 14). A diamine that works as primary component was added up to 2.0 mol% of the total quantity of the aliphatic diamine ("primary component" refers to the diamine component with the largest content in the aliphatic diamine). In addition, 30 parts by weight of water was added to and mixed with 70 parts by weight of the total input materials. The mixture was put in an airtight pressurized container, followed by nitrogen substitution. Heating was started, and after the internal pressure had reached 25 kg/cm², it was maintained at an internal pressure of 25 kg/cm² and an internal temperature of 240°C for 2 hours while releasing moisture out of the system. Subsequently, the contents of the reaction container were discharged onto a cooling belt. The low-degree condensation product thus obtained was vacuum-dried at 120°C for 24 hours, and subjected to solid phase polymerization at 240°C under 40 Pa to produce a polyamide resin. The polyamide resin samples obtained in Examples 12 to 15 and Comparative examples 16 to 18 were amorphous, and therefore, their degree of polymerization was increased in a molten state. The abbreviations used in Tables 3 and 4 are as described below.
5T: an equimolar salt of pentamethylene diamine and terephthalic acid
51: an equimolar salt of pentamethylene diamine and isophthalic acid
6T: an equimolar salt of hexamethylene diamine and terephthalic acid
61: an equimolar salt of hexamethylene diamine and isophthalic acid
101: an equimolar mixture of 1,10-decane diamine and isophthalic acid
56: an equimolar salt of pentamethylene diamine and adipic acid
6: aminocaproic acid

**Table 3**

| | | Example 7 | Example 8 | Example 9 | Example 10 | Example 11 | Example 12 | Example 13 | Example 14 | Example 15 |
|---|---|---|---|---|---|---|---|---|---|---|
| composition | | 5T/5I =80/20 | 5T/5I =70/30 | 5T/5I =60/40 | 5T/5I/6 =72/18/10 | 5T/10I =70/30 | 5T/5I =50/50 | 5T/5I =30/70 | ST/SI/6 =64/16/20 | ST/SI/56 =35/35/30 |
| (A) | pentamethylene diamine | 38.1 | 38.1 | 38.1 | 34.3 | 26.7 | 38.0 | 38.1 | 30.5 | 39.0 |
| (B) | terephthalic acid | 49.5 | 43.3 | 37.1 | 44.6 | 43.3 | 31.0 | 18.6 | 39.6 | 21.7 |
| (C) | isophthalic acid | 12.4 | 18.6 | 24.8 | 11.1 | 14.7 | 31.0 | 43.3 | 9.9 | 21.7 |
| | aminocaproic acid | | | | 10.0 | | | | 20.0 | |
| | 1,10 diaminodecane | | | | | 15.3 | | | | |
| | adipic acid | | | | | | | | | 17.6 |
| ηr | - | 1.88 | 2.11 | 2.35 | 2.21 | 2.33 | 2.02 | 2.00 | 2.23 | 2.33 |
| Tm₁ | °C | 335 | 330 | 308 | 310 | 276 | - | - | - | - |
| Tm₂ | °C | 326 | 301 | 280 | 296 | 268 | - | - | - | - |
| Tg | °C | 143 | 142 | 140 | 131 | 130 | 139 | 136 | 121 | 108 |
| solubility of retained sample in sulfuric acid | - | o | o | o | o | o | o | o | o | o |
| Y/X | - | 0.872 | 0.896 | 0.991 | 1.07 | 1.01 | 1.01 | 1.08 | 1.02 | 1.00 |

[Table 4]

**Table 4**

| | | Comparative example 12 | Comparative example 13 | Comparative example 14 | Comparative example 15 | Comparative example 16 | Comparative example 17 | Comparative example 18 |
|---|---|---|---|---|---|---|---|---|
| composition | | 6T/6I =75/25 | 6T/6I =70/30 | 6T/6I =65/35 | 6T/6I =60/40 | 6T/6I =50/50 | 6T/6I =30/70 | 5T/6I =10/90 |
| (A) | pentamethylene diamine | | | | | | | 3.8 |
| (B) | terephthalic acid | 44.1 | 41.2 | 3 8.2 | 35.3 | 29.4 | 17.6 | 6.2 |
| (C) | isophthalic acid | 14.7 | 17.6 | 20.6 | 23.5 | 29.4 | 41.2 | 53.0 |
| other components | hexamethylene diamine | 41.2 | 41.2 | 41.2 | 41.2 | 41.2 | 41.2 | 37.0 |
| ηr | - | 1.88 | 1.91 | 2.06 | 2.11 | 2.15 | 2.08 | 1.96 |
| Tm₁ | °C | 346 | 343 | 332 | 320 | - | - | - |
| Tm₂ | °C | 339 | 330 | 318 | 308 | - | - | - |
| Tg | °C | 136 | 135 | 134 | 133 | 131 | 126 | 119 |
| solubility of retained sample in sulfuric acid | - | x | x | x | x | x | x | x |
| Y/X | - | - | - | - | - | - | - | - |

As seen from Examples 8, 9, 12, and 13 and Comparative examples 13, and 15 to 17, comparison of the polyamide samples having the same composition of an equimolar salt of aliphatic diamine and terephthalic acid and an equimolar salt of aliphatic diamine and isophthalic acid indicates that the polyamide resin of the invention can have a lower melting point and a higher glass transition temperature, and consequently have a higher moldability and heat resistance. It also has a higher melt retention stability.

### Examples 16 to 24

A 30 wt% aqueous solution of an equimolar salt (5T) of the pentamethylene diamine produced in Reference example 2 and terephthalic acid, and aminocarboxylic acid were mixed in a weight ratio as shown in Tables 5 and 6. About 60g of the solution was poured in a test tube, and in addition, pentamethylene diamine was also poured in the test tube up to 1.0 mol% relative to the 5T salt. The solution was placed in an autoclave, which was then closed airtightly, followed by nitrogen substitution. The jacket temperature was set to 310°C, and heating was started. After the internal pressure had reached 17.5 kg/cm², the internal pressure was maintained at 17.5 kg/cm² for 3 hours. Subsequently, the internal pressure was gradually decreased for 1 hour down to atmospheric pressure. Then, a nitrogen flow was supplied, and the heating was stopped when the internal temperature reached 270°C. After cooling to room temperature, the test tube was taken out of the autoclave to obtain a polyamide oligomer sample. This polyamide oligomer was crushed and subjected to solid phase polymerization at 240°C and under 40 Pa to provide a polyamide resin.

### Comparative examples 19 to 24

Except that an equimolar salt (6T salt) of hexamethylene diamine and terephthalic acid was used instead of the 30 wt% aqueous solution of an equimolar salt (5T salt) of pentamethylene diamine and terephthalic acid, and that solid phase polymerization was carried out at 220°C, the same procedure as in Example 1 was carried out to produce a polyamide resin.

The abbreviations used in Tables 5 and 6 are as described below.
5T: an equimolar salt of pentamethylene diamine and terephthalic acid
6T: an equimolar salt of hexamethylene diamine and terephthalic acid
6: aminocaproic acid
11: 11-aminoundecanoic acid
12: 12-aminododecanoic acid
[Table 5]

**Table 5**

| | | Example 16 | Example 17 | Example 18 | Example 19 | Example 20 | Example 21 | Example 22 | Example 23 | Example 24 |
|---|---|---|---|---|---|---|---|---|---|---|
| composition | | 5T/6 =80/20 | 5T/6 =70/30 | 5T/11 =80/20 | 5T/11 =70/30 | 5T/11 =60/40 | 5T/12 =80/20 | 5T/12 =70/30 | 5T/12 =60/40 | 5T/11/12 =70/15/15 |
| (A) | pentamethylene diamine | 30.5 | 26.7 | 30.5 | 26.7 | 22.8 | 30.5 | 26.7 | 22.8 | 26.7 |
| (B) | terephthalic acid | 49.5 | 43.3 | 49.5 | 43.3 | 37.2 | 49.5 | 43.3 | 37.2 | 43.3 |
| (C) | aminocaproic acid | 20.3 | 30.0 | | | | | | | --- |
| | amino undecanoic acid | | | 20.0 | 30.0 | 40.0 | --- | --- | --- | 15.0 |
| | amino dodecanoic acid | | | | | | 20.0 | 30.0 | 40.0 | 15.0 |
| ηr | - | 2.40 | 2.52 | 2.50 | 2.45 | 2.51 | 2.41 | 2.36 | 2.33 | 2.37 |
| Tm₁ | °C | 318 | 298 | 321 | 297 | 280 | 322 | 300 | 278 | 297 |
| Tm₂ | °C | 312 | 290 | 320 | 295 | 278 | 322 | 298 | 275 | 296 |
| Tg | °C | 121 | 110 | 110 | 106 | 93 | 115 | 103 | 90 | 104 |
| water absorption (method A) | wt% | 3.74 | 3.95 | 3.55 | 3.20 | 3.15 | 3.52 | 3.15 | 3.12 | 3.23 |
| solubility of retained sample in sulfuric acid | - | o | o | o | o | o | o | o | o | o |
| Y/X | - | 0.950 | 0.968 | 0.908 | 0.959 | 0.996 | 0.946 | 0.98 | 1.00 | 1.04 |

[Table 6]

**Table 6**

| | | Comparative example 19 | Comparative example 20 | Comparative example 21 | Comparative example 22 | Comparative example 23 | Comparative example 24 |
|---|---|---|---|---|---|---|---|
| composition | | 6T/6 =80/20 | 6T/6 =70/30 | 6T/6 =60/40 | 6T/12 =80/20 | 6T/12 =70/30 | 6T/12 =60/40 |
| (A) | pentamethylene diamine | | | | | | |
| (B) | terephthalic acid | 47.1 | 41.2 | 35.3 | 47.1 | 41.2 | 35.3 |
| (C) | aminocaproic acid | 20.0 | 30.0 | 40.0 | | | |
| | amino dodecanoic acid | | | | 20.0 | 30.0 | 40.0 |
| other components | hexamethylene diamine | 32.9 | 28.8 | 24.7 | 32.9 | 28.8 | 24.7 |
| ηr | - | 2.41 | 2.60 | 3.24 | 2.48 | 2.33 | 2.40 |
| Tm₁ | °C | 323 | 310 | 264 | 336 | 313 | 285 |
| Tm₂ | °C | 321 | 306 | 258 | 334 | 311 | 282 |
| Tg | °C | 113 | 105 | 99 | 113 | 99 | 85 |
| water absorption (method A) | wt% | 3.72 | 3.91 | 5.30 | 3.50 | 3.13 | 3.10 |
| solubility of retained sample in sulfuric acid | - | x | x | x | x | x | x |
| Y/X | - | - | - | - | - | - | - |

As seen from Examples 16, 17, and 21 to 23 and Comparative examples 19, 20, and 22 to 24, comparison of polyamide samples having the same composition of an equimolar salt of aliphatic diamine and terephthalic acid, and aminocarboxylic acid indicates that the polyamide resin of the invention can have a lower melting point and a higher glass transition temperature, and consequently have a higher moldability and heat resistance. It also has a higher melt retention stability.

### Example 25 to 36, Comparative example 25 to 29

An equimolar salt of aliphatic diamine and dicarboxylic acid was weighed out, or the input materials were directly weighed out and blended according to the weight ratios shown in Tables 7 to 9. Except for the cases where the diamine component with the highest content of all aliphatic diamine components is a diamine component with a carbon number of 7 or more, the primary diamine component was added excessively up to 1.5 mol% relative to the total weight of aliphatic diamine. In addition, 30 parts by weight of water relative to 70 parts by weight of the total input materials was added and mixed. This was put in a pressurized container, which was closed airtightly, followed by nitrogen substitution. Heating was started, and after the internal pressure had reached 20 kg/cm², it was maintained at an internal pressure of 20 kg/cm² and an internal temperature of 240°C for 2 hours while releasing moisture out of the system. Subsequently, the contents of the reaction container were discharged onto a cooling belt. The material was vacuum-dried at 100°C for 24 hours to obtain a polyamide resin oligomer. The polyamide resin oligomer thus obtained was crushed, dried and subjected to solid phase polymerization under 50 Pa at 240°C (solid phase polymerization at 180°C in Comparative example 26) to provide a polyamide resin.

The abbreviations used in Tables 7 to 9 are as described below.
5T: an equimolar salt of pentamethylene diamine and terephthalic acid
10T: an equimolar mixture of 1,10-decane diamine and terephthalic acid
9T: an equimolar mixture of 1,9-nonane diamine and terephthalic acid
56: an equimolar salt of pentamethylene diamine and adipic acid
106: an equimolar mixture of 1,10-decane diamine and adipic acid
66: an equimolar salt of hexamethylene diamine and adipic acid
6T: an equimolar salt of hexamethylene diamine and terephthalic acid
1010: an equimolar mixture of 1,10-decane diamine and sebacic acid
6: aminocaproic acid

**Table 7**

| | | Example 25 | Example 26 | Example 27 | Example 28 | Example 29* | Example 30* | Example 31 | Comparative example 25 |
|---|---|---|---|---|---|---|---|---|---|
| composition | | 5T/10T =80/20 | 5T/10T =70/30 | 5T/10T =60/40 | 5T/10T =50/50 | 5T/10T =20/80 | 5T/10T =10/90 | 5T/9T =70/30 | 10T |
| (A) | pentamethylene diamine | 30.5 | 26.6 | 22.8 | 19.0 | 7.6 | 3.8 | 26.7 | |
| (B) | terephthalic acid | 59.3 | 58.1 | 56.8 | 55.5 | 51.7 | 50.4 | 58.7 | 49.1 |
| (C) | 1, 10 - diaminodecane | 10.2 | 15.3 | 20.4 | 25.5 | 40.7 | 45.8 | | 50.9 |
| | 1, 9 - diaminononane | | | | | | | 14.6 | |
| ηr | - | 2.59 | 2.71 | 2.92 | 3.02 | 2.67 | 2.88 | 2.65 | 2.85 |
| Tm₁ | °C | 338 | 325 | 313 | 299 | 301 | 310 | 309 | 318 |
| Tm₂ | °C | 334 | 317 | 300 | 290 | 291 | 302 | 302 | 313 |
| Tg | °C | 137 | 132 | 129 | 126 | 118 | 115 | 133 | 112 |
| water absorption (method B) | wt% | 7.31 | 6.78 | 6.21 | 5.64 | 3.92 | 3.35 | 6.83 | 2.78 |
| solubility of retained sample in sulfuric acid | - | o | o | o | o | o | o | o | x |
| Y/X | - | 0.907 | 0.959 | 0.979 | 1.10 | 1.31 | 1.36 | 0.974 | - |

| | | | | | | | | | |
|---|---|---|---|---|---|---|---|---|---|
| * Reference Material | | | | | | | | | |

**Table 8**

| | | Example 32 | Example 33* | Example 34 | Example 35* | Example 36 | Comparative example 26 |
|---|---|---|---|---|---|---|---|
| composition | | 5T/56/10T =56/14/30 | 5T/10T/106 =20/64/16 | 5T/10T/6 =56/24/20 | 56/10T =10/90 | 5T/56/10T =35/35/30 | 5T/10T/106 =20/32/48 |
| (A) | pentamethylene diamine | 27.1 | 7.6 | 21.3 | 4.1 | 27.7 | 7.6 |
| (B) | terephthalic acid | 49.4 | 43.8 | 46.5 | 44.2 | 36.4 | 28.1 |
| (C) | 1, 10 - diaminodecane | 15.3 | 41.2 | 12.2 | 45.8 | 15.3 | 42.3 |
| | adipic acid | 8.2 | 7.4 | | 5.9 | 20.6 | 22.0 |
| | aminocaproic acid | | | 20 | | | |
| ηr | - | 2.51 | 2.52 | 2.66 | 2.87 | 2.72 | 2.23 |
| Tm₁ | °C | 298 | 277 | 278 | 292 | 267 | 204 |
| Tm₂ | °C | 294 | 275 | 276 | 288 | 265 | 202 |
| Tg | °C | 117 | 105 | 112 | 104 | 95 | 82 |
| water absorption (method B) | wt% | 6.59 | 4.01 | 6.93 | 3.81 | 7.78 | 4.25 |
| solubility of retained sample in sulfuric acid | - | o | o | o | o | o | o |
| Y/X | - | 0.988 | 1.18 | 1.03 | 1.31 | 1.01 | 1.09 |

| | | | | | | | |
|---|---|---|---|---|---|---|---|
| *Reference Material | | | | | | | |

**[Table 9**

| | | Comparative example 1 | Comparative example 7 | Comparative example 10 | Comparative example 27 | Comparative example 28 | Comparative example 29 | Comparative example 30 |
|---|---|---|---|---|---|---|---|---|
| composition | | 56 | 5T/6T =50/50 | 66/6T =50/50 | 1010/10T =20/80 | 6T/10T =20/80 | 6T/10T =50/50 | 6T/10T =60/40 |
| (A) | pentamethylene diamine | 41.1 | 19.0 | | | | | |
| (B) | terephthalic acid | | 60.4 | 29.4 | 39.3 | 51.1 | 54.0 | 54.9 |
| (C) | adipic acid | 58.9 | | 27.9 | | | | |
| (C) | sebacic acid | | | | 10.8 | | | |
| (C) | 1, 10 - diaminodecane | | | | 49.9 | 40.7 | 25.4 | 20.4 |
| Other Components | hexamethylene diamine | | 20.6 | 42.7 | | 8.2 | 20.6 | 24.7 |
| ηr | - | 2.76 | 2.44 | 2.41 | 2.51 | 2.75 | 2.63 | 2.87 |
| Tm₁ | °C | 255 | 317 | 302 | 303 | 300 | 311 | 327 |
| Tm₂ | °C | 254 | 314 | 288 | 300 | 294 | 305 | 320 |
| Tg | °C | 53 | 141 | 83 | 98 | 123 | 124 | 129 |
| water absorption (method B) | wt% | 11.9 | 8.61 | 7.55 | 2.59 | 3.61 | 4.78 | 5.02 |
| solubility of retained sample in sulfuric acid | - | o | o | x | x | x | x | x |
| Y/X | - | 0.971 | 0.971 | - | - | - | - | - |

Comparison of Example 28 with Comparative example 7 indicates that the polyamide resin of the invention is desirably low in water absorption rate. Comparison of Examples 27 to 29 with Comparative examples 28 to 30 indicates that the polyamide resin of the invention has a high melt retention stability.

### Examples 37 and 38 and Comparative examples 31 and 32

An equimolar salt of aliphatic diamine and dicarboxylic acid was blended according to the weight ratios shown in Table 10. Excess diamine was added up to 1.0 mol% relative to the total weight of aliphatic diamine. In addition, 30 parts by weight of water relative to 70 parts by weight of the total input materials was added and mixed. This was put in a pressurized container, which was closed airtightly, followed by nitrogen substitution. Heating was started, and after the internal pressure had reached 20 kg/cm², it was maintained at an internal pressure of 20 kg/cm² and an internal temperature of 240°C for 2 hours while releasing moisture out of the system. Subsequently, the contents of the reaction container were discharged onto a cooling belt. The material was vacuum-dried at 100°C for 24 hours to obtain a polyamide resin oligomer. The polyamide resin oligomer thus obtained was crushed, dried and subjected to solid phase polymerization under 50 Pa at 240°C to provide a polyamide resin.

The abbreviations used in Table 10 are as described below.
5T: an equimolar salt of pentamethylene diamine and terephthalic acid
6T: an equimolar salt of hexamethylene diamine and terephthalic acid
510: an equimolar salt of pentamethylene diamine and sebacic acid
610: an equimolar salt of hexamethylene diamine and sebacic acid
[Table 10]

**Table 10**

| | | Example 37 | Example 38 | Comparative example 31 | Comparative example 32 |
|---|---|---|---|---|---|
| composition | | 5T/510 =80/20 | 5T/510 =70/30 | 6T/610 =80/20 | 6T/610 =70/30 |
| (A) | pentamethylene diamine | 37.2 | 36.7 | | |
| (B) | terephthalic acid | 49.5 | 43.4 | 47.1 | 41.2 |
| (C) | sebacic acid | 13.3 | 19.9 | 12.7 | 19.0 |
| other components | hexamethylene diamine | | | 40.2 | 39.8 |
| ηr | - | 2.35 | 2.41 | 2.89 | 2.97 |
| Tm₁ | °C | 331 | 323 | 345 | 337 |
| Tm₂ | °C | 330 | 306 | 337 | 323 |
| Tg | °C | 116 | 100 | 113 | 96 |
| water absorption (method B) | wt% | 6.52 | 6.21 | 5.57 | 5.17 |
| solubility of retained sample in sulfuric acid | - | o | o | x | x |
| Y/X | - | 0.932 | 0.967 | - | - |

As seen from Examples 37 and 38 and Comparative examples 31 and 32, comparison of polyamide samples having the same composition of an equimolar salt of aliphatic diamine and terephthalic acid and an equimolar salt of aliphatic diamine and sebacic acid indicates that the polyamide resin of the invention can have a lower melting point and a higher glass transition temperature, and consequently have a higher moldability and heat resistance. It also has a higher melt retention stability.

### Example 39

A 50 wt% aqueous solution of an equimolar salt (56) of the pentamethylene diamine produced in Reference example 2 and adipic acid and a 30 wt% aqueous solution an equimolar salt (5T) of pentamethylene diamine and terephthalic acid, each accounting for 50 parts by weight, were blended and excess pentamethylene diamine was added up to 1.3 mol% relative to the total quantity of diamine in the salts. The mixture solution was fed to a pressured reaction container, which was then closed airtightly, followed by nitrogen substitution. Heating was started, and after the internal pressure had reached 25 kg/cm², it was maintained at an internal pressure of 25 kg/cm² and an internal temperature of 240°C for 2 hours while releasing moisture out of the system. Subsequently, the contents of the reaction container were discharged onto a cooling belt. The low-degree condensation product obtained after vacuum drying at 120°C for 24 hours was subjected to solid phase polymerization at 240°C under 40 Pa to produce a polyamide resin (ηr=2.75). Then, 100 parts by weight of said polyamide resin was supplied to a twin screw extruder (TEX30, supplied by The Japan Steel Works, Ltd.) adjusted to a cylinder temperature of 310°C and a screw rotation rate of 250 rpm, and melt-kneaded while supplying 42.9 parts by weight of glass fiber (T289, supplied by Nippon Electric Glass Co., Ltd.) from a side feeder. The extruded string was pelletized, vacuum-dried at 120°C for 24 hours, and injection-molded (mold temperature 80°C), followed by evaluation in mechanical characteristics. Elsewhere, the resulting polyamide resin composition was subjected to melt retention in a nitrogen atmosphere at 310°C for 30 minutes, and a 0.25g specimen was dissolved in 25 ml of hexafluoroisopropanol. The evaluation results were shown with a "o" for cases where the polyamide resin dissolved to such an extent that the composition lost its shape, and a "x" for cases where the polyamide resin did not dissolve and the composition maintained its shape.

### Comparative example 33

Except for using a 50 wt% aqueous solution of an equimolar salt (66) of hexamethylene diamine and adipic acid and a 30 wt% aqueous solution of an equimolar salt (6T) of hexamethylene diamine and terephthalic acid as input materials, the same procedure as in Example 39 was carried out to produce a polyamide resin composition. The resulting polyamide resin had a ηr of 2.84.
[Table 11]

**Table 11**

| | | Example 39 | Comparative example 33 |
|---|---|---|---|
| 56/5T=50/50 | parts by weight | 100 | |
| 66/6T=50/50 | parts by weight | | 100 |
| GF | parts by weight | 42.9 | 42.9 |
| bending elastic modulus | GPa | 9.02 | 8.87 |
| tensile strength | MPa | 169 | 160 |
| solubility of retained sample in HFIP | - | o | x |

Comparison of Example 39 with Comparative example 33 indicates that the polyamide resin composition of the invention has a high bending elastic modulus, high tensile strength, and high melt retention stability.

### Example 40

Then, 100 parts by weight of the polyamide resin (56/5T=50/50) obtained in Example 39 and 33.3 parts by weight of acid-modified ethylene-butene copolymer (Tafmer MH7020, supplied by Mitsui Chemicals, Inc.) were dry-blended, and supplied to a twin screw extruder (TEX30, supplied by The Japan Steel Works, Ltd.) adjusted to a cylinder temperature of 310°C and a screw rotation rate of 250 rpm, followed by melt kneading to provide a polyamide resin composition. The extruded string was pelletized, vacuum-dried at 120°C for 24 hours, and injection-molded (mold temperature 100°C), followed by evaluation in mechanical characteristics. Results are shown in Table 5. Elsewhere, the resulting polyamide resin composition was subjected to melt retention in a nitrogen atmosphere at 310°C for 30 minutes, and a 0.25g specimen was dissolved in 25 ml of hexafluoroisopropanol. The evaluation results were shown with a "o" for cases where the polyamide resin dissolved to such an extent that the composition lost its shape, and a "x" for cases where the polyamide resin did not dissolve and the composition maintained its shape.

### Comparative example 34

Except for using the polyamide resin (66/6T=50/50) produced in Comparative example 33, the same procedure as in Example 40 was carried out to produce a polyamide resin composition.
[Table 12]

**Table 12**

| | | Example 40 | Comparative example 34 |
|---|---|---|---|
| 56/5T=50/50 | parts by weight | 100 | |
| 66/6T=50/50 | parts by weight | | 100 |
| MH7020 | parts by weight | 33.3 | 33.3 |
| bending elastic modulus | GPa | 2.18 | 2.07 |
| tensile strength | MPa | 65 | 62 |
| solubility of retained sample in HFIP | - | o | x |

Comparison of Example 40 with Comparative example 34 indicates that the polyamide resin composition of the invention has a high bending elastic modulus, high tensile strength, and high melt retention stability.

### Example 41

Then, 100 parts by weight of the polyamide resin produced in Example 29 and 35 parts by weight of glass fiber (T-747GH, supplied by Nippon Electric Glass Co., Ltd.) were dry-blended, and supplied to the hopper of a single screw extruder with a diameter of 40 mm, followed by melt kneading under the conditions of a cylinder temperature of 310°C and screw rotation rate of 100 rpm to provide a glass fiber reinforced composition. This composition had a melting point of 290°C and a water absorption (method B) of 2.91%, indicating that it had a lower water absorption than that of the polyamide resin produced in Example 5.

### Example 42

Then, 100 parts by weight of polyphenylene ether resin (Iupiace PX-100F, supplied by Mitsubishi Engineering-Plastics Corporation), 1.2 parts by weight of maleic anhydride, and 0.1 part by weight of a radical generation agent (Perhexyne 25B, supplied by NOF Corporation) were dry-blended, and melt-kneaded at a cylinder temperature of 320°C to prepare a modified polyphenylene ether resin. In addition, 100 parts by weight of the polyamide resin produced in Example 29 and 30 parts by weight of said modified polyphenylene ether resin were dry-blended, and supplied to a twin screw extruder (TEX30, supplied by The Japan Steel Works, Ltd.) adjusted to a cylinder temperature of 310°C and a screw rotation rate of 250 rpm to provide a polyamide resin composition. This composition had a melting point of 290°C and a water absorption (method B) of 2.75%, indicating that it had a lower water absorption than that of the polyamide resin produced in Example 29.

### Industrial applicability

With the feature of being high in heat resistance and melt retention stability, the polyamide resin of the invention can serve effectively as material for automobile/vehicle related parts, electric/electronic related parts, home/office electric product parts, computer related parts, facsimile/copier related parts, machine related parts, and other various uses.

## Claims

1. A polyamide resin obtainable through polycondensation of (A) pentamethylene diamine, (B) terephthalic acid and/or a derivative thereof, (C) at least one selected from the group of adipic acid, azelaic acid, sebacic acid, undecanedioic acid, dodecanedioic acid, isophthalic acid, 1,9-diaminononane, 1,10-diaminodecane, 1,11-diaminoundecane, 1,12-diaminododecane, caprolactam, undecalactam, laurolactam, aminocaproic acid, 11-aminoundecanoic acid, 12-aminododecanoic acid, and a derivative thereof, wherein the content by weight of the repeating unit derived from the component (A) is in the range of 10 wt% or more and 45 wt% or less of the total weight of the polymer and the content by weight of the repeating unit derived from the component (C) is in the range of 10 wt% or more and 50 wt% or less of the total weight of the polymer, while the relative viscosity at 25°C in a 98% sulfuric acid solution with a 0.01 g/ml content is 1.5 to 4.5.

2. A polyamide resin as claimed in Claim 1 wherein the content by weight of the repeating unit derived from the component (A) is in the range of 10 wt% or more and 40 wt% or less of the total weight of the polymer.

3. A polyamide resin as claimed in either Claim 1 or 2 wherein the content by weight of the repeating unit derived from the component (B) is in the range of 10 wt% or more and 60 wt% or less of the total weight of the polymer.

4. A polyamide resin as claimed in any of Claims 1 to 3 wherein the ratio of the relative viscosity Y of a sulfuric acid solution of a polyamide retained for 30 minutes at a temperature 20°C higher than the melting point to the relative viscosity X of the sulfuric acid solution before retention, Y/X, is in the range of 0.8 or more and 1.5 or less.

5. A polyamide resin as claimed in any of Claims 1 to 4 wherein the temperature of the endothermic peak as determined by differential scanning calorimetry during the process of cooling the melt down to 30°C at a cooling rate of 20°C/min and then heating it at a heating rate of 20°C/min in an inert gas atmosphere is in the range of 260°C or more and 350°C or less.

6. A polyamide resin as claimed in any of Claims 1 to 5 wherein the component (C) is adipic acid or a derivative thereof.

7. A polyamide resin as claimed in Claim 6 wherein the heat quantity of the endothermic peak as determined by differential scanning calorimetry during the process of cooling the melt down to 30°C at a cooling rate of 20°C/min and then heating it at a heating rate of 20°C/min in an inert gas atmosphere is 55 J/g or more.

8. A polyamide resin as claimed in any of Claims 1 to 5 wherein the component (C) is at least one selected from the group of 1,9-diaminononane, 1,10-diaminodecane, 1,11-diaminoundecane, and 1,12-diaminododecane.

9. A polyamide resin as claimed in any of Claims 1 to 5 wherein the component (C) is at least one selected from the group of caprolactam, undecalactam, laurolactam, aminocaproic acid, 11-aminoundecanoic acid, and 12-aminododecanoic acid.

10. A polyamide resin as claimed in any of Claims 1 to 5 wherein the component (C) is at least one selected from the group of azelaic acid, sebacic acid, undecanedioic acid, dodecanedioic acid, and a derivative thereof.

11. A polyamide resin as claimed in any of Claims 8 to 10 wherein the water absorption determined after immersion in water and treatment in a hot air oven at 50°C for 100 hours is 8.5 wt% or less.

12. A polyamide resin as claimed in any of Claims 1 to 5 wherein the component (C) is isophthalic acid or a derivative thereof.

13. A polyamide resin composition comprising 0.1 to 200 parts by weight of an inorganic filler added to 100 parts by weight of a polyamide resin as claimed in any of Claims 1 to 12.

14. A polyamide resin composition comprising 5 to 100 parts by weight of an impact strength modifier added to 100 parts by weight of a polyamide resin as claimed in any of Claims 1 to 12 or a polyamide resin composition as claimed in Claim 13.

15. A molded article obtainable by molding of a polyamide resin as claimed in any of Claims 1 to 12 or a polyamide resin composition as claimed in either Claim 13 or 14.

## Patentansprüche

1. Polyamidharz, das durch Polykondensation von (A) Pentamethylendiamin, (B) Terephthalsäure und/oder einem Derivat davon, (C) zumindest einem ausgewählt aus der Gruppe bestehend aus Adipinsäure, Azelainsäure, Sebacinsäure, Undecandisäure, Dodecandisäure, Isotphalsäure, 1,9-Diaminononan, 1,10-Diaminodecan, 1,11-Diaminoundecan, 1,12-Diaminododecan, Caprolactam, Undecalactam, Laurolactam, Aminocapronsäure, 11-Aminoundecansäure, 12-Aminododecansäure und Derivaten davon, erhältlich ist, wobei der Gewichtsgehalt der von Komponente (A) stammenden Grundeinheit im Bereich von 10 Gew.-% oder mehr und 45 Gew.-% oder weniger des Gesamtgewichts des Polymers und der Gewichtsgehalt der von Komponente (C) stammenden Grundeinheit im Bereich von 10 Gew.-% oder mehr und 50 Gew.-% oder weniger des Gesamtgewichts des Polymers liegt, während die relative Viskosität bei 25 °C in einer 98 % Schwefelsäurelösung mit einem Gehalt von 0,01 g/ml 1,5 bis 4,5 beträgt.

2. Polyamidharz nach Anspruch 1, wobei der Gewichtsgehalt der von Komponente (A) stammenden Grundeinheit im Bereich von 10 Gew.-% oder mehr und 40 Gew.-% oder weniger des Gesamtgewichts des Polymers liegt.

3. Polyamidharz nach Anspruch 1 oder 2, wobei der Gewichtsgehalt der von Komponente (B) stammenden Grundeinheit im Bereich von 10 Gew.-% oder mehr und 60 Gew.-% oder weniger des Gesamtgewichts des Polymers liegt.

4. Polyamidharz nach einem der Ansprüche 1 bis 3, wobei das Verhältnis Y/X zwischen der relativen Viskosität Y einer Schwefelsäurelösung eines Polyamids, die 30 min lang auf einer Temperatur gehalten wird, die 20 °C über dem Schmelzpunkt liegt, und der relativen Viskosität X der Schwefelsäurelösung davor im Bereich von 0,8 oder mehr und 1,5 oder weniger liegt.

5. Polyamidharz nach einem der Ansprüche 1 bis 4, wobei die Temperatur des durch Differenzial-Scanning-Kalorimetrie während des Prozesses des Abkühlens der Schmelze auf 30 °C mit einer Kühlrate von 20 °C/min und des anschließenden Erhitzens mit einer Heizrate von 20 °C/min unter Inertgasatmosphäre ermittelten endothermen Peaks im Bereich von 260 °C oder mehr und 350 °C oder weniger liegt.

6. Polyamidharz nach einem der Ansprüche 1 bis 5, wobei die Komponente (C) Adipinsäure oder ein Derivat davon ist.

7. Polyamidharz nach Anspruch 6, wobei die Wärmemenge des durch Differenzial-Scanning-Kalorimetrie während des Prozesses des Abkühlens der Schmelze auf 30 °C mit einer Kühlrate von 20 °C/min und des anschließenden Erhitzens mit einer Heizrate von 20 °C/min unter Inertgasatmosphäre ermittelten endothermen Peaks unter Inertgasatmosphäre 55 J/g oder mehr beträgt.

8. Polymaidharz nach einem der Ansprüche 1 bis 5, wobei die Komponente (C) zumindest eines ausgewählt aus der Gruppe bestehend aus 1,9-Diaminononan, 1,10-Diaminodecan, 1,11-Diaminoundecan und 1,12-Diaminododecan ist.

9. Polyamidharz nach einem der Ansprüche 1 bis 5, wobei die Komponente (C) zumindest eines ausgewählt aus der Gruppe bestehend aus Caprolactam, Undecalactam, Laurolactam, Aminocapronsäure, 11-Aminoundecansäure und 12-Aminododecansäure ist.

10. Polyamidharz nach einem der Ansprüche 1 bis 5, wobei die Komponente (C) zumindest eines ausgewählt aus der Gruppe bestehend aus Azelainsäure, Secacinsäure, Undecandisäure, Dodecandisäure und Derivaten davon ist.

11. Polyamidharz nach einem der Ansprüche 8 bis 10, wobei die nach Eintauchen in Wasser und 100-stündiger Behandlung ein einem Heißluftofen bei 50 °C ermittelte Wasserabsorption 8,5 Gew.-% oder weniger beträgt.

12. Polyamidharz nach einem der Ansprüche 1 bis 5, wobei die Komponente (C) Isophthalsäure oder ein Derivat davon ist.

13. Polyamidharzzusammensetzung, die 0,1 bis 200 Gewichtsteile eines anorganischen Füllstoffs umfasst, die zu 100 Gewichtsteile eines Polyamidharzes nach einem der Ansprüche 1 bis 12 zugesetzt sind.

14. Polyamidharzzusammensetzung, die 5 bis 100 Gewichtsteile eines Schlägzähigkeitmodifikators umfasst, die zu 100 Gewichtsteile eines Polyamidharzes nach einem der Ansprüche 1 bis 12 oder einer Polyamidharzzusammensetzung nach Anspruch 13 zugesetzt sind.

15. Formteil, das durch Formen eines Polyamidharzes nach einem der Ansprüche 1 bis 12 oder einer Polyamidharzzusammensetzung nach Anspruch 13 oder 14 erhältlich ist.

## Revendications

1. Résine de polyamide pouvant être obtenue par polycondensation (A) de pentaméthylènediamine, (B) d'acide téréphtalique et/ou d'un dérivé de celui-ci, (C) d'au moins l'un choisi dans le groupe constitué par l'acide adipique, l'acide azélaïque, l'acide sébacique, l'acide undécanedioïque, l'acide dodécanedioïque, l'acide isophtalique, le 1,9-diaminononane, le 1,10-diaminodécane, le 1,11-diaminoundécane, le 1,12-diaminododécane, le caprolactame, l'undécalactame, le laurolactame, l'acide aminocaproïque, l'acide 11-aminoundécanoïque, l'acide 12-aminododécanoïque, et un dérivé de ceux-ci, dans laquelle la teneur en poids en le motif répétitif dérivé du composant (A) est située dans la plage allant de 10 % en poids ou plus à 45 % en poids ou moins du poids total du polymère et la teneur en poids en le motif répétitif dérivé du composant (C) est située dans la plage allant de 10 % en poids ou plus à 50 % en poids ou moins du poids total du polymère, cependant que la viscosité relative à 25°C dans une solution à 98 % d'acide sulfurique avec une teneur de 0,01 g/ml est de 1,5 à 4,5.

2. Résine de polyamide selon la revendication 1, dans laquelle la teneur en poids en le motif répétitif dérivé du composant (A) est située dans la plage allant de 10 % en poids ou plus à 40 % en poids ou moins du poids total du polymère.

3. Résine de polyamide selon l'une ou l'autre des revendications 1 et 2, dans laquelle la teneur en poids en le motif répétitif dérivé du composant (B) est située dans la plage allant de 10 % en poids ou plus à 60 % en poids ou moins du poids total du polymère.

4. Résine de polyamide selon l'une quelconque des revendications 1 à 3, dans laquelle le rapport de la viscosité relative Y d'une solution dans l'acide sulfurique d'un polyamide maintenue pendant 30 minutes à une température supérieure de 20°C au point de fusion à la viscosité relative X de la solution dans l'acide sulfurique avant maintien, Y/X, est situé dans la plage allant de 0,8 ou plus à 1,5 ou moins.

5. Résine de polyamide selon l'une quelconque des revendications 1 à 4, dans laquelle la température du pic endothermique tel que déterminé par calorimétrie à balayage différentiel durant le traitement de refroidissement de la masse fondue jusqu'à 30°C à une vitesse de refroidissement de 20°C/min et ensuite le chauffage de celle-ci à une vitesse de chauffage de 20°C/min dans une atmosphère de gaz inerte est située dans la plage allant de 260°C ou plus à 350°C ou moins.

6. Résine de polyamide selon l'une quelconque des revendications 1 à 5, dans laquelle le composant (C) est l'acide adipique ou un dérivé de celui-ci.

7. Résine de polyamide selon la revendication 6, dans laquelle la quantité de chaleur du pic endothermique tel que déterminé par calorimétrie à balayage différentiel durant le traitement de refroidissement de la masse fondue jusqu'à 30°C à une vitesse de refroidissement de 20°C/min et ensuite le chauffage de celle-ci à une vitesse de chauffage de 20°C/min dans une atmosphère de gaz inerte est de 55 J/g ou plus.

8. Résine de polyamide selon l'une quelconque des revendications 1 à 5, dans laquelle le composant (C) est au moins l'un choisi dans le groupe constitué par le 1,9-diaminononane, le 1,10-diaminodécane, le 1,11-diaminoundécane, et le 1,12-diaminododécane.

9. Résine de polyamide selon l'une quelconque des revendications 1 à 5, dans laquelle le composant (C) est au moins l'un choisi dans le groupe constitué par le caprolactame, l'undécalactame, le laurolactame, l'acide aminocaproïque, l'acide 11-aminoundécanoïque, et l'acide 12-aminododécanoïque.

10. Résine de polyamide selon l'une quelconque des revendications 1 à 5, dans laquelle le composant (C) est au moins l'un choisi dans le groupe constitué par l'acide azélaïque, l'acide sébacique, l'acide undécanedioïque, l'acide dodécanedioïque, et un dérivé de ceux-ci.

11. Résine de polyamide selon l'une quelconque des revendications 8 à 10, dans laquelle l'absorption d'eau, déterminée après immersion dans de l'eau et traitement dans un four à air chaud à 50°C pendant 100 heures, est de 8,5 % en poids ou moins.

12. Résine de polyamide selon l'une quelconque des revendications 1 à 5, dans laquelle le composant (C) est l'acide isophtalique ou un dérivé de celui-ci.

13. Composition de résine de polyamide comprenant 0,1 à 200 parties en poids d'une charge inorganique, ajoutées à 100 parties en poids d'une résine de polyamide selon l'une quelconque des revendications 1 à 12.

14. Composition de résine de polyamide comprenant 5 à 100 parties en poids d'un agent modifiant la résistance au choc, ajoutées à 100 parties en poids d'une résine de polyamide selon l'une quelconque des revendications 1 à 12 ou d'une composition de résine de polyamide selon la revendication 13.

15. Article moulé pouvant être obtenu par moulage d'une résine de polyamide selon l'une quelconque des revendications 1 à 12 ou d'une composition de résine de polyamide selon l'une ou l'autre des revendications 13 à 14.
